# EUROPÄISCHE PATENTSCHRIFT

(11) **EP 1 908 973 B1**
(45) Veröffentlichungstag und Bekanntmachung des Hinweises auf die Patenterteilung: **04.05.2011**
(21) Anmeldenummer: 07017444.6
(22) Anmeldetag: 06.09.2007
(51) Int. Cl.: F16D 1/08, F16D 1/108

(54) **Momentenschnittstelle in einem Triebstrang eines Kraftfahrzeugs**
Coupling interface in the power train of a motor vehicle
Interface de moments dans un entraînement de véhicule automobile

(30) Priorität: 06.10.2006 DE 102006047301
(43) Veröffentlichungstag der Anmeldung: 09.04.2008
(73) Patentinhaber: Schaeffler Technologies GmbH & Co. KG, 91074 Herzogenaurach (DE)
(72) Erfinder: Junker, Uli, 77652 Offenburg (DE); Zhou, Bin, 77815 Bühl (DE); Zierden, Oliver, 47057 Duisburg (DE); Züfle, Markus, 77815 Bühl (DE); Müller, Jens, 77815 Bühl (DE)

(56) Entgegenhaltungen:
- WO-A2-2007/000131
- WO-A2-2007/000151
- US-A- 2 803 474

## Beschreibung

Die Erfindung betrifft eine Momentenschnittstelle zur Übertragung eines Drehmoments in einem Triebstrang eines Kraftfahrzeuges mit einem insbesondere von einem Verbrennungsmotor des Kraftfahrzeuges antreibbaren Flansch, einem Federelement und einem dem Flansch über das Federelement relativ verdrehbar federnd zugeordneten Stützblech.

Momentenschnittstellen in einem Triebstrang eines Kraftfahrzeuges können zur Übertragung eines von einem Verbrennungsmotor erzeugten Drehmoments eingesetzt werden. Es ist beispielsweise möglich, eine solche Momentenschnittstelle zur Übertragung eines Drehmoments zur Kopplung eines Zweimassenschwungrades mit einer Kupplungseinheit des Triebstrangs des Kraftfahrzeuges vorzusehen. Bei der Abtriebseinheit kann es sich beispielsweise um eine Doppelkupplung handeln.

Eine Momentschnittstelle zur Übertragung eines Drehmoments wird aus Dokument US 2 803 474, das den nächstliegenden Stand der Technik darstellt, offenbart.

Aufgabe der Erfindung ist es, eine alternative, insbesondere verbesserte Momentenschnittstelle zur Übertragung eines Drehmoments in einem Triebstrang eines Kraftfahrzeuges bereitzustellen.

Die Aufgabe ist mit einer Momentenschnittstelle zur Übertragung eines Drehmoments in einem Triebstrang eines Kraftfahrzeuges mit einem insbesondere von einem Verbrennungsmotor des Kraftfahrzeuges antreibbaren Flansch, einem Federelement und einem dem Flansch über das Federelement relativ verdrehbar federnd zugeordneten Stützblech dadurch gelöst, dass zur Montage der Momentenschnittstelle das Stützblech über einen Sicherungsstift gegen eine Rückstellkraft des Federelements drehfest mit dem Flansch verriegelbar ist. Es ist also möglich, das Federelement über den Sicherungsstift vorgespannt zu halten. Dabei kann vorteilhaft das Stützblech relativ zu dem Flansch drehfest gegen die Rückstellkraft des Federelements positioniert und dort verriegelt werden, so dass zur weiteren Verwendung der Momentenschnittstelle, beispielsweise zur Anbindung des Flansches und des Stützbleches an eine weitere Einheit des Triebstrangs, die Federkraft des Federelements nicht mehr überwunden werden muss. Dadurch ist eine Anbindung des mit dem Stützblech gekoppelten Flansches an weitere Einheiten des Triebstrangs frei von möglicherweise durch das Federelement verursachten Klemmkräften, also klemmfrei beziehungsweise mit Spiel möglich.

Ein bevorzugtes Ausführungsbeispiel ist dadurch gekennzeichnet, dass der Flansch ein im Wesentlichen radial verlaufendes erstes Langloch aufweist, und dass das Stützblech ein im Wesentlichen im Umfangsrichtung verlaufendes sowie im Wesentlichen radial nach innen zeigend abgewinkelt verlaufendes zweites Langloch aufweist, wobei der Sicherungsstift in das erste und zweite Langloch eingreift. Die Langlöcher überdecken sich also zumindest teilweise, so dass durch diese hindurch der Sicherungsstift eingreifen kann. Vorteilhaft kann der Sicherungsstift an entsprechenden Flanken der Langlöcher anschlagen und mithin so den Flansch drehfest gegenüber dem Stützblech verriegeln.

Ein weiteres Ausführungsbeispiel ist dadurch gekennzeichnet, dass der Sicherungsstift in das erste und zweite Langloch mit Spiel eingreift. Vorteilhaft ist so möglich, dass der Sicherungsstift in den Langlöchern ohne wesentliche Reibkräfte frei beweglich ist, insbesondere soweit der Flansch und das Stützblech in eine Verdrehposition relativ zueinander gebracht werden, bei der der Sicherungsstift kraftlos ist, also nicht an den entsprechenden Flanken der Langlöcher anschlägt.

Ein weiteres Ausführungsbeispiel ist dadurch gekennzeichnet, dass der Sicherungsstift zwischen einer Verriegelungsposition und einer Freigabeposition verstellbar ist. Vorteilhaft kann also durch die Wahl der Position des Sicherungsstiftes der Flansch in der Freigabeposition in gewissen Grenzen relativ zum Stützblech verdreht werden oder in der Verriegelungsposition entsprechend entgegen den Rückstellkräften des Federelements drehfest verriegelt werden.

Ein weiteres Ausführungsbeispiel ist dadurch gekennzeichnet, dass der Sicherungsstift fliehkraft-, federkraft- und/oder magnetkraftunterstützt von der Verriegelungsposition in die Freigabeposition verstellbar ist. Hierdurch ist es möglich, beispielsweise nach Anbindung der Momentenschnittstelle an die Abtriebseinheit, den Sicherungsstift in seine Freigabeposition zu verstellen, um die Momentenschnittstelle betriebsbereit zu machen.

Ein weiteres Ausführungsbeispiel ist dadurch gekennzeichnet, dass der Sicherungsstift beim Betrieb des Kraftfahrzeuges von der Verriegelungsposition in die Freigabeposition verstellbar ist. Es ist also vorteilhaft möglich, den Triebstrang des Kraftfahrzeuges zu komplettieren, also die Momentenschnittstelle zwischen dem Flansch und der Abtriebseinheit herzustellen, wobei sich der Sicherungsstift zunächst noch in Verriegelungsposition befindet. Erst zu einem späteren Zeitpunkt, beispielsweise bei der ersten Inbetriebnahme des Kraftfahrzeuges, kann dann der Sicherungsstift von seiner Verriegelungsposition in die Freigabeposition verstellt werden. Vorteilhaft kann dies beispielsweise ohne weiteres Zutun, lediglich abhängig von einem bestimmten Betriebszustand des Kraftfahrzeuges erfolgen. Vorteilhaft kann dies beispielsweise durch die innerhalb des Triebstrangs auftretenden Fliehkräfte erfolgen. Da der Sicherungsstift jedoch im Zugbetrieb des Kraftfahrzeuges an den Langlöchern verklemmt ist, müssen zusätzlich der Flansch und das Stützblech relativ so zueinander verdreht werden, dass sich der dabei auftretende, durch das Federelement hervorgerufene Reibschluss des Sicherungsstiftes innerhalb der Langlöcher löst.

Dies kann vorteilhaft beim Schubbetrieb des Kraftfahrzeuges erfolgen, wobei ein Drehmoment von den Rädern des Kraftfahrzeuges auf einen diese abbremsenden Verbrennungsmotor des Kraftfahrzeuges übertragen wird. Sobald das Schubmoment beim Abbremsen des Kraftfahrzeuges über den Verbrennungsmotor das von dem Federelement eingeleitete Drehmoment übersteigt, werden der Flansch und das Stützblech relativ so gegeneinander verdreht, dass der Sicherungsstift in den Langlöchern Spiel bekommt. Mittels der durch die Rotation des Triebstrangs verursachten, auf den Sicherungsstift wirkenden Fliehkraft kann dieser dann radial nach außen bewegt werden. Vorteilhaft kann dadurch der Sicherungsstift von seiner radial weiter innen liegenden Verriegelungsposition in seine radial weiter außen liegende Entriegelungsposition verstellt werden. Danach ist der Sicherungsstift funktionslos und die Momentenschnittstelle vollständig hergestellt. Es ist jedoch möglich, zu einem späteren Zeitpunkt, beispielsweise bei einem Werkstattaufenthalt, die Sicherungsstifte erneut zu verriegeln.

Ein weiteres bevorzugtes Ausführungsbeispiel ist dadurch gekennzeichnet, dass der Flansch eine erste Innenverzahnung zur drehfesten Anbindung der Momentenschnittstelle an eine Außenverzahnung einer Abtriebseinheit des Triebstrangs aufweist, und dass das Stützblech eine in die erste Innenverzahnung eingreifende zweite Innenverzahnung aufweist. Insbesondere presst die zweite Innenverzahnung des Stützblechs über das mit dem Stützblech gekoppelte Federelement bei angebundener Momentenschnittstelle und entriegeltem Sicherungsstift die Außenverzahnung der Abtriebseinheit spielfrei an die erste Innenverzahnung zugseitig an. Sobald der Sicherungsstift also von seiner Verriegelungsposition in seine Entriegelungsposition verlagert ist, kann eine entsprechend des von dem Federelement ausgeübten Drehmoments zugseitig spielfreie Verzahnung der ersten und zweiten Innenverzahnung mit der Außenverzahnung der Abtriebseinheit bewirkt werden.

Beispielhaft kann eine zugseitig spielfreie Verzahnung bis ca. 60 Nm wirksam sein. Zur oben beschriebenen Entriegelung des Sicherungsstiftes ist also ein erstmalig auftretendes Schubmoment innerhalb des Triebstrangs von ca. 60 Nm oder mehr erforderlich. Sofern sich die Drehmomentschwankungen unterhalb des von dem Federelement bereitgestellten Maximalwertes bewegen, wird über das Federelement und mittels der zweiten, in die erste Innenverzahnung eingreifende Innenverzahnung stets die erste Innenverzahnung des Flansches spielfrei an die Außenverzahnung der Abtriebseinheit des Triebstrangs angepresst.

Die Aufgabe ist außerdem durch einen Triebstrang eines Kraftfahrzeuges mit einer vorab beschriebenen Momentenschnittstelle gelöst.

Die Aufgabe ist ferner durch ein Kraftfahrzeug mit einem vorab beschriebenen Triebstrang gelöst.

Die Aufgabe ist schließlich mit einem Verfahren zur Montage einer Momentenschnittstelle eines Triebstrangs eines Kraftfahrzeuges, insbesondere einer vorab beschriebenen Momentenschnittstelle, durch folgende Schritte gelöst: Vorspannen des Flansches gegen das Stützblech über das Federelement, drehfestes Verriegeln des Flansches mit dem Stützblech über den Sicherungsstift. Vorteilhaft kann also der Flansch mit dem Stützblech über den Sicherungsstift verriegelt werden. Dies kann vorteilhaft dazu ausgenutzt werden, die Momentenschnittstelle quasi kraftlos, also ohne die Federkraft des Federelements überwinden zu müssen, mit der Abtriebseinheit des Triebstrangs zu montieren beziehungsweise herzustellen.

Ein bevorzugtes Ausführungsbeispiel des Verfahrens ist durch folgenden Schritt gekennzeichnet: Einleiten eines Schubmoments in die Momentenschnittstelle über den Triebstrang des Kraftfahrzeugs beim Betrieb des Kraftfahrzeugs und dabei Entriegeln des Sicherungsstiftes. Es ist also möglich, den Sicherungsstift quasi ohne weiteres Zutun beim Betrieb, insbesondere bei der ersten Inbetriebnahme des Kraftfahrzeuges, lediglich durch Einleiten eines Schubmoments zu entriegeln.

Ein weiteres bevorzugtes Ausführungsbeispiel des Verfahrens ist durch folgenden Schritt gekennzeichnet: Entriegeln des Sicherungsstiftes, fliehkraft-, magnetkraft- und/oder federkraftunterstützt. Insbesondere mit Hilfe von Fliehkräften, wie sie für gewöhnlich beim Betrieb eines Triebstrangs eines Kraftfahrzeuges auftreten, kann der Sicherungsstift quasi automatisch während des Betriebes entriegelt werden. Vorteilhaft können dafür jedoch auch zusätzlich und/oder unterstützend Magnet- und/oder Federkräfte dienen.

Ein weiteres bevorzugtes Ausführungsbeispiel des Verfahrens ist durch folgenden Schritt gekennzeichnet: Verlagern des Sicherungsstiftes radial nach außen zum Entriegeln des Sicherungsstiftes. Da die im Triebstrang auftretenden Fliehkräfte stets radial nach außen wirken, können diese vorteilhaft zur Verlagerung und damit gleichzeitigen Entriegelung des Sicherungsstiftes ausgenutzt werden.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, ähnliche und/oder funktionsgleiche Teile sind mit gleichen Bezugszeichen versehen. Es zeigen:
- Figur 1: eine Draufsicht auf einen Teil eines Triebstrangs eines Kraftfahrzeuges mit einem Flansch und einem diesem zugeordneten Stützblech;
- Figur 2: einen Teilschnitt entlang der Linie II - II des in Figur 1 gezeigten Triebstrangs;
- Figur 3: drei verschiedene Positionen eines Sicherungsstiftes relativ zu dem Flansch und dem Stützblech während eines Montagevorgangs entsprechend eines in Figur 1 durch einen Kreis X gekennzeichneten Details; und
- Figur 4: das in Figur 3 gezeigte Detail aus Figur 1, wobei sich der Sicherungsstift, der Flansch und das Stützblech in einer Position befinden, wie sie sich beim Betrieb der Momentenschnittstelle ergibt.

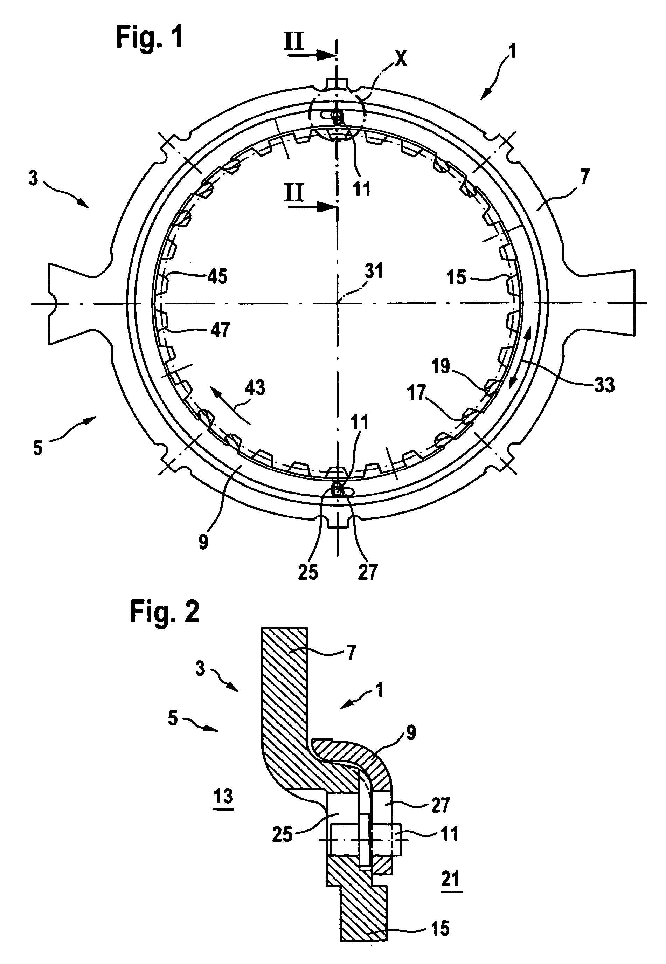

Figur 1 zeigt eine Draufsicht auf eine Momentenschnittstelle 1 zur Übertragung eines Drehmoments in einem Triebstrang 3 eines Kraftfahrzeuges 5.

Figur 2 zeigt einen Teilschnitt entlang der Linie II - 11 aus Figur 1 mit einem Flansch 7, einem Stützblech 9 und einem Sicherungsstift 11. Der Flansch 7 kann antriebsseitig einem Verbrennungsmotor des Kraftfahrzeuges, der durch die Bezugsziffer 13 angedeutet ist, zugeordnet werden.

Der Flansch 7 weist eine erste Innenverzahnung 15 auf. Wie in Figur 1 ersichtlich, weist das Stützblech 9 eine zweite Innenverzahnung 17 auf, die mittels Laschen 19 in die erste Innenverzahnung 15 des Flansches 7 eingreift.

Figur 1 zeigt den Flansch 7 in einer relativen Drehposition zum Stützblech 9, wobei sich der Sicherungsstift 11 in einer Sicherungsposition befindet. In der in Figur 1 gezeigten Position des Flansches 7 zum Stützblech 9 kann in die Innenverzahnungen 15 und 17 eine entsprechende Außenverzahnung einer Abtriebseinheit 21 des Triebstrangs 3 eingebracht werden. Die Abtriebseinheit 21 ist in Figur 2 mittels des Bezugszeichens 21 angedeutet. Bei der Abtriebseinheit 21 kann es sich beispielsweise um eine Kupplung, beispielsweise eine Doppelkupplung des Triebstranges 3 des Kraftfahrzeuges 5 handeln.

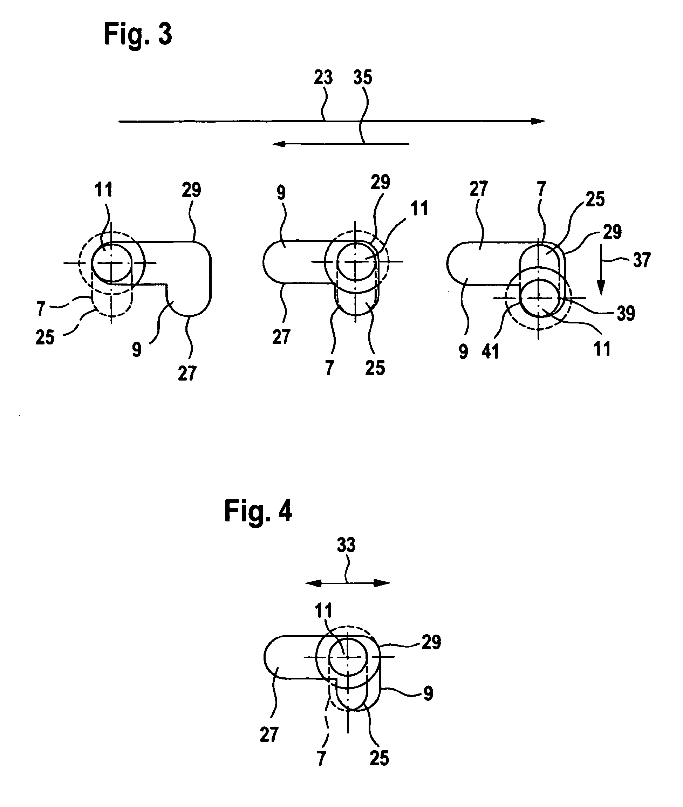

Figur 3 zeigt ein mit einem mit X gekennzeichnetes Detail aus Figur 1. Zu erkennen ist der Sicherungsstift 11 in einer Draufsicht in drei verschiedenen Positionen relativ zum Flansch 7 und zum Stützblech 9. Ein Pfeil 23 deutet die zeitliche Abfolge der insgesamt drei in Figur 3 gezeigten Positionen während eines Montageablaufs der Momentenschnittstelle 1 an. Nicht sichtbare Linien sind in Figur 3 gestrichelt dargestellt.

Der Flansch 7 weist ein erstes Langloch 25 auf. Das Langloch 25 erstreckt sich im Wesentlichen in radialer Richtung, verläuft also in seiner Längsausdehnung im Wesentlichen entlang eines Radius des Triebstrangs 3 des Kraftfahrzeuges 5. Das Stützblech 9 weist ein zweites Langloch 27 auf. Das zweite Langloch 27 erstreckt sich im Wesentlichen entlang einer gedachten Umfangslinie der Momentenschnittstelle 1 des Triebstrangs 3 des Kraftfahrzeuges 5, also einer gedachten Linie, die von einem bestimmten Punkt der Momentenschnittstelle während einer Drehung durchlaufen wird. Außerdem verläuft das zweite Langloch 27 an einem Winkel 29 abgewinkelt im Wesentlichen radial nach innen zeigend, also zu einer Drehachse 31 der Momentenschnittstelle 1 des Triebstrangs 3 des Kraftfahrzeuges 5 hin zeigend. Gemäß der linksseitigen Darstellung in Figur 3 befindet sich der Sicherungsstift 11 an einem radial außen liegenden Ende des ersten Langloches 25 und an einem linken Ende des zweiten Langloches 27. In dieser Position ist ein Federelement, das zwischen den Flansch 7 und das Stützblech 9 geschaltet ist, im Wesentlichen entspannt. Das Federelement ist in den Figuren 1 bis 4 nicht näher dargestellt, jedoch in den Figuren 1 und 4 durch einen Doppelpfeil 33 angedeutet, der anzeigt, dass der Flansch 7 entgegen der Rückstellkraft des Federelements relativ gegenüber dem Stützblech 9 verdrehbar gelagert ist.

In Figur 3 mittig ist eine zweite Position des Flansches 7 relativ zum Stützblech 9 dargestellt. Mittels eines Pfeiles 35 ist angedeutet, dass dazu das Stützblech 7, in Ausrichtung der Figur 1 gesehen, entgegen dem Uhrzeigersinn und entgegen der Rückstellkraft des Federelements verdreht wird. Nach der Verdrehbewegung befindet sich der Sicherungsstift 11 an einem, in Ausrichtung der Figur 3 gesehen, rechten Ende des zweiten Langlochs 27 des Stützblechs 9.

In einem weiteren Montageschritt, der in Figur 3 rechtsseitig dargestellt ist, kann der Sicherungsstift 11 in eine Verriegelungsposition bewegt werden, was durch einen Pfeil 37 angedeutet ist. In dieser Verriegelungsposition befindet sich der Sicherungsstift 11 an einem, in Ausrichtung der Figur 3 gesehen, unteren Ende des ersten Langloches 25 des Flansches 7 und an einem unteren Ende des zweiten Langloches 27 des Stützblechs 9.

Es ist zu erkennen, dass der Sicherungsstift 11 in seiner Sicherungsposition, in Ausrichtung der Figur 3 gesehen, rechtsseitig an einem Anschlag 39 des ersten Langlochs 25 des Flansches 7 und linksseitig an einem zweiten Anschlag 41 des zweiten Langloches 27 des Stützbleches 9 anschlägt, also an dem Flanken der Langlöcher 25 und 27 reibschlüssig verklemmt ist. Der Sicherungsstift 11 befindet sich dabei in einer radial innen liegenden Position und verhindert mittels der Anschläge 39 und 41 ein mittels der Rückstellkraft des Federelements bewirkte Verdrehbewegung des Flansches 7 und des Stützbleches 9. In Figur 1 ist zu erkennen, dass in dieser Position des Flansches 7 zum Stützblech 9 die erste Innenverzahnung 15 und die zweite Innenverzahnung 17 so ineinander greifen, dass eine entsprechende Außenverzahnung des Abtriebselements 21 quasi kraftlos, also mit Spiel eingeführt werden kann.

Figur 4 zeigt ebenfalls das in Figur 3 gezeigte Detail aus Figur 1, wobei sich der Sicherungsstift 11 in einer Entriegelungsposition befindet. Dabei schlägt der Sicherungsstift 11 an einem, in Ausrichtung der Figur 4 gesehen, oberen Ende des ersten Langloches 25 des Flansches 7 an. Durch den Doppelpfeil 33 ist angedeutet, dass sich der Sicherungsstift 11 innerhalb des zweiten Langloches 27 des Stützblechs 9 dabei frei hin und her bewegen kann. Mithin ist also eine frei Beweglichkeit des Flansches 7 relativ zum Stützblech 9 entsprechend der Kopplung des Federelements möglich, wie mittels des Doppelpfeils 33 angedeutet. In dieser Entriegelungsposition des Sicherungsstiftes 11 übt das Federelement ein sich an dem Flansch 7 abstützendes Drehmoment auf das Stützblech 9 aus, so dass die Laschen 19 gegen die entsprechende, nicht dargestellte Außenverzahnung der Abtriebseinheit 21 gepresst werden, was durch einen Pfeil 43 in Figur 1 angedeutet ist. Hierdurch wird über die Laschen 19 die nicht dargestellte Außenverzahnung der Abtriebseinheit 21 auf eine Zugseite 45 der ersten Innenverzahnung 15 des Flansches 7 angepresst. Es ist ersichtlich, dass die durch das Federelement ausgeübte Federkraft die nicht dargestellte Außenverzahnung spielfrei an die Zugseite 45 der ersten Innenverzahnung 15 des Flansches 7 angedrückt wird.

Im Schubbetrieb schlägt die nicht dargestellte Außenverzahnung der Abtriebseinheit 21 an einer Schubseite 47 der ersten Innenverzahnung 15 des Flansches 7 an. Vorteilhaft sind die Laschen 19 der zweiten Innenverzahnung 17 sowie die erste Innenverzahnung 15 so dimensioniert, dass die Laschen 19 schubseitig Spiel aufweisen, also kein Schubmoment über die Laschen 19 auf die erste Innenverzahnung 15 des Flansches 7 durchschlagen kann.

Es ist jedoch zu sehen, dass sich beim Schubbetrieb die nicht dargestellte Außenverzahnung der Abtriebseinheit 21, sofern das von dem Federelement ausgeübte Drehmoment überwunden werden kann, sich von der Zugseite 45 der ersten Innenverzahnung 15 des Flansches 7 ablöst. Dabei kann über die Laschen 19 der zweiten Innenverzahnung 17, die ebenfalls an der nicht dargestellten Außenverzahnung der Abtriebseinheit 21 anschlagen, das Stützblech 9, entsprechend der Ausrichtung in Figur 1, entgegen dem Uhrzeigersinn verdreht werden. Gemäß der rechtsseitigen Darstellung in Figur 3 ist ersichtlich, dass sich dabei der Sicherungsstift 11 entsprechend von den Anschlägen 39 und 41 der Langlöcher 25 und 27 löst. Vorteilhaft kann durch die durch eine Rotation der Momentenschnittstelle 1 des Triebstrangs 3 des Kraftfahrzeugs 5 verursachten Fliehkräfte der Sicherungsstift 11 radial nach außen bewegt werden. Diese Position ist in Figur 4 dargestellt und entspricht der Entriegelungsposition des Sicherungsstiftes 11. Es kann also auf einfache Art und Weise durch Bewegen des Kraftfahrzeuges 5 im Schubbetrieb der Sicherungsstift 11 von seiner Verriegelungsposition, wie in Figur 3 rechtsseitig dargestellt, durch die auftretenden Fliehkräfte in seine Entriegelungsposition, wie in Figur 4 dargestellt, radial nach außen bewegt werden. Diese Bewegung kann gegebenenfalls durch Magnetkräfte und/oder zusätzliche Federelemente, die an dem Sicherungsstift 11 zusätzlich angreifen können, unterstützt werden.

Zur Montage der Momentenschnittstelle 1 kann also zunächst der Flansch 7 gegen das Stützblech 9 über das Federelement vorgespannt werden. Über eine entsprechende Verlagerung des Sicherungsstiftes 11, wie in Figur 3 ersichtlich, kann dann der Flansch 7 drehfest mit dem Stützblech 9 verriegelt werden. Zum Freischalten beziehungsweise Entriegeln des Flansches 7 und des Stützbleches 9 kann ein Schubmoment in den Triebstrang 3 des Kraftfahrzeuges 5 eingeleitet werden, beispielsweise beim Betrieb des Kraftfahrzeuges 5, vorzugsweise beim ersten Inbetriebnehmen des Kraftfahrzeuges 5. Vorteilhaft kann dies mittels im Triebstrang 3 auftretenden Fliehkräften, gegebenenfalls unterstützt durch Magnet- und/oder Federkräfte, geschehen. Dabei kann der Sicherungsstift 11 zum Entriegeln radial nach außen verlagert werden.

Vorteilhaft können ein oder mehrere Sicherungsstifte 11 vorgesehen sein. Das nicht näher dargestellte Federelement kann eine oder mehrere Druckfedern, beispielsweise Spiralfedern, aufweisen, die die erste Innenverzahnungen 15 und 17 des Flansches 7 und des Stützblechs 9 auseinander drücken. Um dennoch eine quasi kraftlose Montage des Flansches 7 und des Stützbleches 9 zu ermöglichen, können diese mittels des Sicherungsstiftes 11 so gegeneinander verriegelt werden, dass ein nicht näher dargestellter Mitnehmerring der Abtriebseinheit 21 quasi kraftlos in die Innenverzahnungen 15 und 17, also mit Spiel, eingeführt werden kann. Im Zugbetrieb leitet der Flansch 7 das Motormoment direkt an den Mitnehmerring weiter. Wird bei Schubbelastung, wie sie zum Beispiel bei Start-Stopp oder Lastwechsein auftritt, ein Moment erreicht, das oberhalb des am Umfang mittels des Federelements eingeleiteten Moments liegt, verstellt der Mitnehmerring das Stützblech 9, wodurch der zumindest eine Sicherungsstift 11 entlastet, also kraftlos wird. Durch die anliegende Fliehkraft wird der zumindest eine Sicherungsstift 11 nach außen getrieben und gibt somit das Stützblech 9 frei. Das Stützblech 9 ist nun entriegelt und drückt den Flansch 7 zugseitig, also spielfrei gegen den nicht dargestellten Mitnehmerring der Abtriebseinheit 21. Die erste Innenverzahnung 15 des Flansches 7 und die zweite Innenverzahnung 17 des Stützbleches 9 sind so ausgelegt, dass hohe Schubmomente (zum Beispiels impacts) direkt vom Mitnehmerring in die erste Innenverzahnung 15 des Flansches 7 geleitet werden, ohne die Laschen 19 des Stützbleches 9 zu blockieren.

### Bezugszeichenliste

- 1.: Momentenschnittstelle
- 3.: Triebstrang
- 5.: Kraftfahrzeug
- 7.: Flansch
- 9.: Stützblech
- 11.: Sicherungsstift
- 13.: Verbrennungsmotor
- 15.: erste Innenverzahnung
- 17.: zweite Innenverzahnung
- 19.: Laschen
- 21.: Abtriebseinheit
- 23.: Pfeil
- 25.: erstes Langloch
- 27.: zweites Langloch
- 29.: Winkel
- 31.: Drehachse
- 33.: Doppelpfeil
- 35.: Pfeil
- 37.: Pfeil
- 39.: erster Anschlag
- 41.: zweiter Anschlag
- 43.: Pfeil
- 45.: Zugseite
- 47.: Schubseite

## Patentansprüche

1. Momentenschnittstelle (1) zur Übertragung eines Drehmoments in einem Triebstrang (3) eines Kraftfahrzeuges (5) mit einem insbesondere von einem Verbrennungsmotor (13) des Kraftfahrzeuges (5) antreibbaren Flansch (7), einem Federelement (33) und einem dem Flansch (7) über das Federelement (33) relativ verdrehbar federnd zugeordneten Stützblech (9), **dadurch gekennzeichnet, dass** zur Montage der Momentenschnittstelle (1) das Stützblech (9) über einen Sicherungsstift (11) gegen eine Rückstellkraft des Federelements (33) drehfest mit dem Flansch (7) verriegelbar ist.

2. Momentenschnittstelle nach Anspruch 1, **dadurch gekennzeichnet, dass** der Flansch (7) ein im wesentlichen radial verlaufendes erstes Langloch (25) aufweist, und dass das Stützblech (9) ein im wesentlichen in Umfangsrichtung verlaufendes sowie im wesentlichen radial nach innen zeigend abgewinkelt verlaufendes zweites Langloch (27) aufweist, wobei der Sicherungsstift (11) in das erste und zweite Langloch (25, 27) eingreift.

3. Momentenschnittstelle nach Anspruch 2, **dadurch gekennzeichnet, dass** der Sicherungsstift (11) in das erste und zweite Langloch (25, 27) mit Spiel eingreift.

4. Momentenschnittstelle nach einem der vorhergehenden Ansprüche, **dadurch gekennzeichnet, dass** der Sicherungsstift (11) zwischen einer Verriegelungsposition und einer Freigabeposition verstellbar ist.

5. Momentenschnittstelle nach einem der vorhergehenden Ansprüche, **dadurch gekennzeichnet, dass** der Verriegelungsstift (11) fliehkraft-, federkraft- und/oder magnetkraftunterstützt von der Verriegelungsposition in die Freigabeposition verstellbar ist.

6. Momentenschnittstelle nach Anspruch 5, **dadurch gekennzeichnet, dass** der Verriegelungsstift (11) beim Betrieb des Kraftfahrzeugs (5) von der Verriegelungsposition in die Freigabeposition verstellbar ist.

7. Momentenschnittstelle nach einem der vorhergehenden Ansprüche, **dadurch gekennzeichnet, dass** der Flansch (7) eine erste Innenverzahnung (15) zur drehfesten Anbindung der Momentenschnittstelle (1) an eine Außenverzahnung einer Abtriebseinheit (21) des Triebstrangs (3) aufweist, und das Stützblech (9) eine in die erste Innenverzahnung (15) eingreifende zweite Innenverzahnung (17) aufweist.

8. Momentenschnittstelle nach Anspruch 7, **dadurch gekennzeichnet, dass** die zweite Innenverzahnung (17) des Stützblechs (9) über das mit dem Stützblech (9) gekoppelte Federelement (33) bei angebundener Momentenschnittstelle (1) und entriegeltem Sicherungsstift (11) die Außenverzahnung der Abtriebseinheit (21) spielfrei an die erste Innenverzahnung (15) zugseitig anpresst.

9. Triebstrang (3) eines Kraftfahrzeuges (5) mit einer Momentenschnittstelle nach einem der vorhergehenden Ansprüche.

10. Kraftfahrzeug (5) mit einem Triebstrang (3) nach Anspruch 9.

11. Verfahren zur Montage einer Momentenschnittstelle (1) eines Triebstrangs (3) eines Kraftfahrzeuges (5), insbesondere einer Momentenschnittstelle (1) nach einem der Ansprüche 1 bis 8, **gekennzeichnet durch** folgende Schritte:
- Vorspannen des Flansches (7) gegen das Stützblech (9) über das Federelement (33);
- Drehfestes Verriegeln des Flansches (7) mit dem Stützblech (9) über den Sicherungsstift (11).

12. Verfahren nach Anspruch 11, **gekennzeichnet durch** folgenden Schritt:
- Einleiten eines Schubmoments in die Momentenschnittstelle (1) über den Triebstrang (3) des Kraftfahrzeuges (5) beim Betrieb des Kraftfahrzeuges (5) und dabei Entriegeln des Sicherungsstiftes (11).

13. Verfahren nach einem der Ansprüche 11 bis 12, **gekennzeichnet durch** folgenden Schritt:
- Entriegeln des Sicherungsstiftes (11) fliehkraft-, magnetkraft- und/oder federkraftunterstützt.

14. Verfahren nach einem der Ansprüche 11 bis 13, **gekennzeichnet durch** folgenden Schritt:
- Verlagern des Sicherungsstiftes (11) radial nach außen zum Entriegeln des Sicherungsstiftes (11).

## Claims

1. Torque interface (1) for transmitting a torque in a drive train (3) of a motor vehicle (5) having a flange (7) which can be driven, in particular, by an internal combustion engine (13) of the motor vehicle (5), a spring element (33) and a supporting plate (9) which is assigned resiliently to the flange (7) in a relatively rotatable manner via the spring element (33), **characterized in that**, in order to mount the torque interface (1), the supporting plate (9) can be locked in a rotationally fixed manner to the flange (7) via a securing pin (11), counter to a restoring force of the spring element (33).

2. Torque interface according to Claim 1, **characterized in that** the flange (7) has a substantially radially extending first slot (25), and **in that** the supporting plate (9) has a second slot (27) which extends substantially in the circumferential direction and extends in an angled-away manner which points substantially radially to the inside, the securing pin (11) engaging into the first and second slots (25, 27).

3. Torque interface according to Claim 2, **characterized in that** the securing pin (11) engages with play into the first and second slots (25, 27).

4. Torque interface according to one of the preceding claims, **characterized in that** the securing pin (11) can be adjusted between a locking position and a release position.

5. Torque interface according to one of the preceding claims, **characterized in that** the locking pin (11) can be adjusted from the locking position into the release position in a manner which is assisted by centrifugal force, spring force and/or magnetic force.

6. Torque interface according to Claim 5, **characterized in that** the locking pin (11) can be adjusted from the locking position into the release position during operation of the motor vehicle (5).

7. Torque interface according to one of the preceding claims, **characterized in that** the flange (7) has a first internal spline system (15) for the rotationally fixed attachment of the torque interface (1) to an external spline system of an output unit (21) of the drive train (3), and the supporting plate (9) has a second internal spline system (17) which engages into the first internal spline system (15).

8. Torque interface according to Claim 7, **characterized in that** the second internal spline system (17) of the supporting plate (9) presses the external spline system of the output unit (21) without play onto the first internal spline system (15) on the traction side via the spring element (33) which is coupled to the supporting plate (9), when the torque interface (1) is attached and the securing pin (11) is unlocked.

9. Drive train (3) of a motor vehicle (5) having a torque interface according to one of the preceding claims.

10. Motor vehicle (5) having a drive train (3) according to Claim 9.

11. Method for mounting a torque interface (1) of a drive train (3) of a motor vehicle (5), in particular a torque interface (1) according to one of Claims 1 to 8, **characterized by** the following steps:
- prestressing of the flange (7) against the supporting plate (9) via the spring element (33);
- rotationally fixed locking of the flange (7) to the supporting plate (9) via the securing pin (11).

12. Method according to Claim 11, **characterized by** the following step:
- introduction of an over-run torque into the torque interface (1) via the drive train (3) of the motor vehicle (5) during operation of the motor vehicle (5) and in the process unlocking of the securing pin (11).

13. Method according to either of Claims 11 and 12, **characterized by** the following step:
- unlocking of the securing pin (11) in a manner which is assisted by centrifugal force, magnetic force and/or spring force.

14. Method according to one of Claims 11 to 13, **characterized by** the following step:
- displacement of the securing pin (11) radially to the outside in order to unlock the securing pin (11).

## Revendications

1. Interface de couple (1) destinée à transmettre un couple de rotation dans le train d'entraînement (3) d'un véhicule automobile (5) et qui présente
une bride (7) qui peut être entraînée en particulier par le moteur à combustion interne (13) du véhicule automobile (5) et
un élément élastique (33) et une tôle d'appui (9) associée élastiquement en rotation relative à la bride (7) par l'intermédiaire de l'élément élastique (33), **caractérisée en ce que**
pour le montage de l'interface de couple (1), la tôle d'appui (9) peut être verrouillée en rotation avec la bride (7) par l'intermédiaire d'une tige de blocage (11) en opposition à la force de rappel de l'élément élastique (33).

2. Interface de couple selon la revendication 1, **caractérisée en ce que** la bride (7) présente un premier trou oblong (25) qui s'étend essentiellement radialement, **en ce que** la tôle d'appui (9) présente un deuxième trou oblong (27) qui s'étend essentiellement dans la direction périphérique et coudé essentiellement radialement vers l'intérieur et **en ce que** la tige (11) s'engage dans le premier et le deuxième trou oblong (25, 27).

3. Interface de couple selon la revendication 2, **caractérisée en ce que** la tige de blocage (11) s'engage avec un jeu dans le premier et dans le deuxième trou oblong (25, 27).

4. Interface de couple selon l'une des revendications précédentes, **caractérisée en ce que** la tige de blocage (11) peut être déplacée entre une position de verrouillage et une position de libération.

5. Interface de couple selon l'une des revendications précédentes, **caractérisée en ce que** la tige de verrouillage (11) peut être déplacée de la position de verrouillage jusque dans la position de libération en étant soutenue par une force centrifuge, une force élastique et/ou une force magnétique.

6. Interface de couple selon la revendication 5, **caractérisée en ce que** la tige de verrouillage (11) peut être déplacée de sa position de verrouillage jusque dans sa position de libération lorsque le véhicule automobile (5) fonctionne.

7. Interface de couple selon l'une des revendications précédentes, **caractérisée en ce que** la bride (7) présente une première denture intérieure (15) qui permet de relier l'interface de couple (1) à rotation solidaire à une denture extérieure d'une unité entraînée (21) du train d'entraînement (3) et **en ce que** la tôle d'appui (9) présente une deuxième denture intérieure (17) qui s'engage dans la première denture intérieure (15).

8. Interface de couple selon la revendication 7, **caractérisée en ce que** la deuxième denture intérieure (17) de la tôle d'appui (9) repousse en traction et sans jeu la denture extérieure de l'unité entraînée (21) contre la première denture intérieure (15) par l'intermédiaire de l'élément élastique (33) couplé à la tôle d'appui (9) lorsque l'interface de couple (1) est relié et la tige de blocage (11) est déverrouillée.

9. Train d'entraînement (3) d'un véhicule automobile (5) doté d'une interface de couple selon l'une des revendications précédentes.

10. Véhicule automobile (5) doté d'un train d'entraînement (3) selon la revendication 9.

11. Procédé de montage d'une interface de couple (1) d'un train d'entraînement (3) d'un véhicule automobile (5), en particulier d'une interface de couple (1) selon l'une des revendications 1 à 8, **caractérisé par** les étapes suivantes :
- précontrainte de la bride (7) contre la tôle d'appui (9) par l'intermédiaire de l'élément élastique (33) et
- verrouillage en rotation de la bride (7) sur la tôle d'appui (9) par l'intermédiaire de la tige de blocage (11).

12. Procédé selon la revendication 11, **caractérisé par** l'étape suivants :
- application d'un couple de poussée dans l'interface de couple (1) par l'intermédiaire du train d'entraînement (3) du véhicule automobile (5) lorsque le véhicule automobile (5) est utilisé, et ainsi déverrouillage de la tige de blocage (11).

13. Procédé selon l'une des revendications 11 et 12, **caractérisé par** l'étape suivante :
- déverrouillage de la tige de blocage (11) sous l'assistance d'une force centrifuge, d'une force magnétique et/ou d'une force élastique.

14. Procédé selon l'une des revendications 11 à 13, **caractérisé par** l'étape suivants :
- déplacement de la tige de blocage (11) radialement vers l'extérieur pour déverrouiller la tige de blocage (11).
